Europäisches Patentamt

European Patent Office

Office européen des brevets

(11) Veröffentlichungsnummer : **0 183 251**
**B1**

(12) **EUROPÄISCHE PATENTSCHRIFT**

(45) Veröffentlichungstag der Patentschrift :
11.01.89

(51) Int. Cl.⁴ : **F 16 F 13/00**, B 60 K 5/12

(21) Anmeldenummer : 85115079.7

(22) Anmeldetag : 28.11.85

(54) Elastisches Motorlager mit hydraulischer Dämpfung.

(30) Priorität : 29.11.84 DE 3443619

(43) Veröffentlichungstag der Anmeldung :
04.06.86 Patentblatt 86/23

(45) Bekanntmachung des Hinweises auf die Patenterteilung : 11.01.89 Patentblatt 89/02

(84) Benannte Vertragsstaaten :
DE FR GB IT SE

(56) Entgegenhaltungen :
EP–A– 0 149 081
EP–A– 0 165 095
DE–A– 3 239 787
DE–B– 1 206 214
DE–U– 1 752 255
DE–U– 8 119 912
FR–A– 2 558 229
PATENT ABSTRACTS OF JAPAN, Band 9, Nr. 162 (M-
394)[1885], 06. Juli 1985
PATENT ABSTRACTS OF JAPAN, Band 9, Nr. 111 (M-
379)[1834], 15. Mai 1985

(73) Patentinhaber : METZELER Gesellschaft mit beschränkter Haftung
Gneisenaustrasse 15
D-8000 München 50 (DE)

(72) Erfinder : Andrä, Rainer, Dr.
Dehrnerstrasse 10
D-6250 Limburg (DE)
Erfinder : Hofmann, Manfred
Gerhard-von-Dietz-Strasse 15
D-6257 Hünfelden 1 (DE)

(74) Vertreter : Michelis, Theodor, Dipl.-Ing.
Gneisenaustrasse 15
D-8000 München 50 (DE)

## Beschreibung

Die Erfindung bezieht sich auf ein elastisches Motorlager mit hydraulischer Dämpfung, insbesondere für Kraftfahrzeuge, mit einer Arbeitskammer, die von einer kegelmantelförmigen elastischen Wandung und einer stirnseitigen Lagerplatte begrenzt ist und über einen ringförmigen Überströmkanal in einer Zwischenplatte mit einer Ausgleichskammer in Verbindung steht, sowie mit einem von der Lagerplatte in die Arbeitskammer ragenden, sich am freien Ende erweiternden und als Zug- und Druckanschlag ausgebildeten Ansatz.

Ein derartiges Motorlager mit einem hinreichend als Zugund Druckanschlag wirkenden Ansatz ist aus der DE-A-32 39 787 bekannt. Hierbei legt sich der kegelmantelförmig ausgebildete Anschlag bei einer Zugbelastung partiell an die Gummiwandung der Arbeitskammer an. Dadurch wird eine kontinuierliche Verhärtung dieser Wandung und damit einer Erhöhung der Steifigkeit des Lagers bewirkt. Darüber hinaus besteht bei einer massiveren Zugbelastung die Gefahr, daß die Gummiwandung vom metallischen Lagermittelteil abreißt.

In der DE-U-1 752 255 ist ein einteiliges, allein mechanisch arbeitendes Gummilager mit einem Zuganschlag beschrieben, der bei Auslenkung durch einen angenähert topfförmigen Anschlagring hintergriffen wird und somit Zugbelastungen mechanisch exakt begrenzt.

Ausgehend von dem eingangs genannten Stand der Technik liegt der vorliegenden Erfindung die Aufgabe zugrunde, einen derartigen Zug- und Druckanschlag für ein hydraulisch gedämpftes Motorlager so auszugestalten, daß in platzsparender Anordnung gleichzeitig eine Entkopplung hochfrequenter Schwingungen und damit eine akustische Abstimmung des Lagers vorgenommen werden kann und darüber hinaus auch eine Dämpfung bei Belastung in radialer Richtung möglich ist.

Zur Lösung dieser Aufgabe ist erfindungsgemäß vorgesehen, daß der Ansatz als zylindrischer Ring mit am innenliegenden Ende sich radial nach außen erstreckendem Rand ausgebildet und im Innern des Ringes eine den Querschnitt überdeckende Gummimembran unter Abschluß einer luftgefüllten Membrankammer angeordnet ist und daß der Rand von einem angenähert topfförmig ausgebildeten Anschlagring hintergriffen ist, dessen axial gerichteter Bereich radiale Durchbrechungen aufweist.

Dabei kann der äußere radiale Bereich der Gummimembran einstückig in eine Gummiauflage für Ober- und Unterseite des Randes übergehen, um damit einen weichen Anschlag in Zug- und Druckrichtung zu gewährleisten.

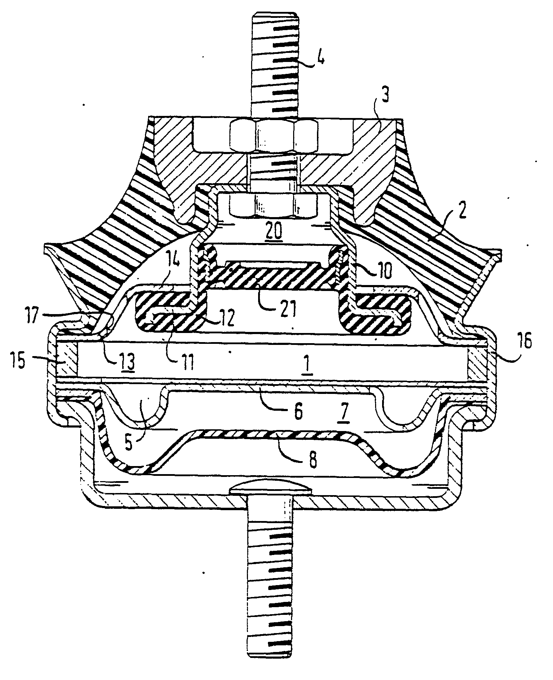

Anhand einer schematischen Zeichnung sind Aufbau und Wirkungsweise eines Ausführungsbeispiels nach der Erfindung näher erläutert. Die einzige Figur zeigt dabei einen Längsschnitt durch ein entsprechendes Motorlager.

Das hydraulisch gedämpfte Motorlager weist eine Arbeitskammer 1 auf, die von einer kegelmantelförmigen, elastomeren Wandung 2 sowie einer stirnseitigen Lagerplatte 3 mit einem Anschlußbolzen 4 begrenzt ist und über einen ringförmigen Kanal 5 in einer Zwischenplatte 6 mit einer Ausgleichskammer 7 in Verbindung steht, die ihrerseits von einem elastischen Balg 8 abgeschlossen ist.

Die Lagerplatte 3 weist nunmehr auf ihrer Innenseite einen in die Arbeitskammer 1 ragenden Ansatz auf, der als zylindrischer Ring 10 mit an innenliegenden Ende sich radial nach außen erstreckendem Rand 11 als Zug- und Druckanschlag ausgebildet ist. Durch die zylindrische, hohle Ausbildung des Ringes 10 ergibt sich im Inneren ein freier Raum 20, der als eingeschlossenes Luftvolumen von einer den freien Querschnitt überdeckenden Gummimembran 21 abgeschlossen ist. Durch diese Membran 21, die in bestimmten Frequenz- und Amplitudenbereichen zur Entkopplung dient, ist eine optimale akustische Abstimmung des Lagers möglich. Der äußere radiale Bereich der Gummimembran 21 geht dabei einstückig in eine Gummiauflage 12 für die Ober- und Unterseite des Randes 11 über, um eine Anschlagdämpfung bei extremen Zug- oder Druckbelastungen zu gewährleisten.

Konzentrisch zum Ring 10 und seinem radialen Rand 12 ist ferner ein angenähert kegelmantelförmiger Anschlagring 13 vorgesehen, der mit seinem innenliegenden Rand 14 den radialen Rand 11 des Ringes 10 auf dessen Oberseite hintergreift. Der Anschlagring 13 ist mit seinem Außenrand ggf. getrennt durch einen Abstandsring 15 — über das äußere Gehäuse 16 gegen die Zwischenplatte 6 verspannt. Durch diesen Anschlagring 13 ist somit eine mechanisch stabile Wegbegrenzung in Zugrichtung sichergestellt.

Bei dem dargestellten Ausführungsbeispiel ist das Lager in ausgefederten Zustand und entsprechender Anlage an den Anschlagring 13 dargestellt. Um dabei einen freien Flüssigkeitsdurchgang vom Raum oberhalb des Anschlagringes 13 in den eigentlichen Arbeitsraum 1 sicherzustellen, weist der Anschlagring 13 im axial gerichteten Bereich radiale Durchbrechungen 17 auf.

Durch die zylindrische Gestaltung des Ringes 10 und die Höhe der Gummiwulst 12 ergibt sich somit eine Geometrie innerhalb der Arbeitskammer mit einer großen, radial wirksamen hydraulischen Fläche, die auch bei radialen Belastungen oder Schwingungen eine seitliche Verdrängung der Flüssigkeit — die dabei über die Durchbrüche 17 ausweichen kann — und damit eine zusätzliche Radialdämpfung bewirkt.

## Patentansprüche

1. Elastisches Motorlager mit hydraulischer Dämpfung, insbesondere für Kraftfahrzeuge, mit einer Arbeitskammer (1), die von einer kegelmantelförmigen elastomeren Wandung (2) und einer stirnseitigen Lagerplatte (3) begrenzt ist und über einen ringförmigen Überströmkanal (5) in einer Zwischenplatte (6) mit einer Ausgleichskammer (7) in Verbindung steht, sowie mit einem von der Lagerplatte (3) in die Arbeitskammer (1) ragenden, sich am freien Ende erweiternden und als Zug- und Druckanschlag ausgebildeten Ansatz (10), dadurch gekennzeichnet, daß der Ansatz als zylindrischer Ring (10) mit am innenliegenden Ende sich radial nach außen erstreckendem Rand (11) ausgebildet und im Innern des Ringes (10) eine den Querschnitt überdeckende Gummimembran (21) unter Abschluß einer luftgefüllten Membrankammer (20) angeordnet ist und daß der Rand (11) von einem angenähert topfförmig ausgebildeten Anschlagring (13) hintergriffen ist, dessen axial gerichteter Bereich radiale Durchbrechungen (17) aufweist.

2. Motorlager nach Anspruch 1, dadurch gekennzeichnet, daß der äußere radiale Bereich der Gummimembran (21) einstückig in eine Gummiauflage (12) für Ober- und unterseite des Randes (11) übergeht.

3. Motorlager nach Anspruch 1, dadurch gekennzeichnet, daß der Anschlagring (13) mit seinem Außenrand gegen die Zwischenplatte (6) verspannt ist.

### Claims

1. Elastic engine mount with hydraulic damping, in particular for motor vehicles, comprising a working chamber (1) which is bounded by an elastomeric wall (2) in the form of a cone-shaped shell and by a bearing plate (3) at its end face and communicates with an equalizing chamber (7) by way of an annular overflow channel (5) in an intermediate plate (6), and further comprising an attachment (10) designed as tension and pressure abutment which extends from the bearing plate (3) into the working chamber (1) and widens out at its free end, characterised in that the attachment is in the form of a cylindrical ring (10) having a rim (11) extending radially outwards at its internal end, and a rubber membrane (21) is arranged in the interior of the ring (10) to cover the cross-section and close an air-filled membrane chamber (20) and in that an approximately cup-shaped abutment ring (13) extends behind the rim (11) and has radial openings (17) in its axially directed part.

2. Engine mount according to claim 1, characterised in that the radially outer region of the rubber membrane (21) is continuous as in one piece with a rubber-lining (12) for the upper and under side of the rim (11).

3. Engine mount according to claim 1, characterised in that the abutment ring (13) bears with its outer rim against the intermediate plate (6).

### Revendications

1. Support élastique pour moteur, à amortissement hydraulique, notamment pour véhicules automobiles, comportant une chambre de travail (1) limitée par une paroi élastomère (2) en forme d'enveloppe conique et une plaque frontale de support (3) et reliée à une chambre de compensation (7) par l'intermédiaire d'un canal annulaire de trop-plein (5) ménagé dans une plaque intercalaire (6), ainsi qu'un embout (10), qui s'étend dans la chambre de travail (1), à partir de la plaque de support (3), s'élargit au niveau de son extrémité libre et est réalisé sous la forme d'une butée en traction et en compression, caractérisé par le fait que l'embout est réalisé sous la forme d'un anneau cylindrique (10) comportant un bord (11) s'étendant radialement vers l'extérieur au niveau de l'extrémité intérieure de l'anneau, qu'une membrane en caoutchouc (21) s'étendant sur toute la section transversale est disposée à l'intérieur de l'anneau (10) de manière à fermer une chambre à membrane (20) remplie d'air et qu'une bague de butée (13), qui est réalisée approximativement sous la forme d'un pot et dont la partie s'étendant axialement comporte des perçages radiaux (17), s'engage derrière le bord (11).

2. Support pour moteur suivant la revendication 1, caractérisé par le fait que la partie radiale extérieure de la membrane en caoutchouc (21) se prolonge d'un seul tenant sous la forme d'un appui en caoutchouc (12) pour la face supérieure et la face inférieure du bord (11).

3. Support pour moteur suivant la revendication 1, caractérisé par le fait que la bague de butée (13) est serrée, au niveau de son bord extérieur, contre la plaque intercalaire (6).